# EUROPÄISCHE PATENTANMELDUNG

(11) **EP 4 663 476 A1**
(43) Veröffentlichungstag der Anmeldung: **17.12.2025**
(21) Anmeldenummer: 25178923.6
(22) Anmeldetag: 27.05.2025
(51) Int. Cl.: B60N 2/34, B60N 2/24, B60N 2/42, B60N 2/427, B60N 3/00, B60N 3/06, B60R 21/00

(54) **LIEGE ODER LIEGESITZ FÜR EIN FAHRZEUG**

(30) Priorität: 31.05.2024 CH 5802024
(71) Anmelder: Twiliner AG, 8005 Zürich (CH)
(72) Erfinder: BOURGEOIS, Joël Béla, 8005 Zürich (CH); MELE, Ivan, 5033 Buchs (CH); MÜNCH, Dirk, 8055 Zürich (CH)
(74) Vertreter: Frei Patent Attorneys

(57) **Zusammenfassung**

Eine Vorrichtung liegt in Form einer Liege (36) für ein Fahrzeug vor, oder in Form eines verstellbaren Fahrzeugsitzes, der in einer Liegeposition eine Liege (36) bildet. Die Vorrichtung ist zum Einbau in ein Fahrzeug (30) vorgesehen,
• wobei die Liege (36) durch eine Grundstruktur (22) getragen ist,
• die Liege (36) eine im Wesentlichen ebene Liegefläche (35) bildet, und
• die Liege (36) einen Kopfteil (32) und eine Beinauflage (34) aufweist, die in einer Längsrichtung der Liege (36) voneinander beabstandet an entgegengesetzten Enden der Liege (36) angeordnet sind.

Dabei weist die Liege (36) eine Rückhaltevorrichtung auf, die wiederum einen Rückhaltesack (4) und einen Hüftgurt (5) aufweist, wobei der Rückhaltesack (4) dazu ausgelegt ist, Füsse und Beine eines Passagiers aufzunehmen.

## Beschreibung

Die Erfindung bezieht sich auf das Gebiet der Sitze oder Liegen in Fahrzeugen zur Personenbeförderung. Sie bezieht sich auf eine Vorrichtung in Form einer Liege für ein Fahrzeug, oder in Form eines verstellbaren Fahrzeugsitzes, der in einer Liegeposition eine Liege oder einen stark geneigten Sitz bildet.

Um das umweltfreundliche Reisen voranzubringen ist es wichtig, Reisenden Alternativen zum Reisen per Flugzeug zu bieten. Eine mögliche Alternative sind Reisebusse, insbesondere über Nacht. Heutige Bussitze sind jedoch für lange Reisen oft unkomfortabel und Reisende erreichen ihr Ziel erschöpft. Eine mögliche Lösung sind Komfortsitze, in welcher Reisende auch eine liegende Position einnehmen können.

Für den Liegendtransport von Passagieren insbesondere in Kraftomnibussen fehlen Rückhaltesysteme, die sowohl komfortabel als auch sicher sind.

Bei üblichen Sicherheitsgurten besteht im Fall einer Frontalkollision die Gefahr, dass der Körper unter dem Sicherheitsgurt hindurchtaucht und in Fahrtrichtung nach vorne vom Sitz herunterrutscht (Submarining). Dabei kann der Hüftgurt über den Beckenknochen hinweg in den Bereich des Magens oder des Halses rutschen und zu Verletzungen führen.

Gurtsysteme wie 5-Punkte- und 6-Punkte-Gurte können zwar das Submarining verhindern, verunmöglichen aber das Drehen von der Rückenposition in die Seiten- oder Bauchlage und werden daher als einschränkend empfunden.

Knautschzonen oder Airbags vor den Sitzen können gewisse Verletzungen in einem Frontalunfall verhindern. Ohne zusätzliches Rückhaltesystem fallen die Passagiere allerdings bei Rollover-Unfall (seitlichem Überschlag) aus dem Sitz, was tödliche Folgen haben kann.

Entsprechend braucht es neue Rückhaltesysteme, die den sicheren und komfortablen Transport von Passagieren in Liege- und Schlafpositionen in Fahrzeugen, insbesondere Kraftomnibussen, ermöglichen, namentlich solche, die sowohl den Frontal- als auch den Überrollunfall abdecken, und dabei Submarining verhindern und ausreichend Bewegungsfreiheit zulassen, um in allen Lagen schlafen zu können

DE102014213301A1 und DE102019115254A1 zeigen jeweils eine Rückhaltevorrichtung mit einer Kombination einer Decke und eines Airbags.

DE102019206453A1, EP3599135A1, DE102018206090A1 und DE102019005142A1 zeigen jeweils ein Gurtsystem für eine in einem Fahrzeug liegende Person.

US 2021/0170969 A1 beschreibt ein einen Sitz für ein selbstfahrendes Fahrzeug. Der Sitz kann im um die vertikale Achse gedreht und/oder in eine rückwärts geneigte Lage gebracht werden. Ein "deployable restraint" wie z.B. ein Netz kann dabei automatisch über den Kopf des Insassen gezogen werden, ggf. bis über den Oberkörper. Es ist nicht angegeben, in welcher Position sich der Sitz im Falle einer Kollision befinden soll oder gebracht werden soll. Es ist lediglich beschrieben, wie bei einer Kollision die «deployable restraint» ausgefahren wird. US 2021/0170969 A1 referenziert in der erteilten Fassung US11027683B1 eine «co-pending application Ser. No. 16/703,222, filed on Dec. 12, 2019, which is incorporated herein by reference in its entirety». Diese referenzierte Anmeldung lehrt, bei eine Kollision («crash») einen Sitz in eine aufrechte Position zu bringen, bei der der Insasse in Fahrtrichtung blickt, weil Airbags auf diese Stellung optimiert sind.

DE 10 2015 008 883 Al beschreibt einen Fusssack oder eine Decke, die mehrlagig und als Airbag ausgebildet sind. Im Kollisionsfall werden sie aufgeblasen und fixieren dadurch den Insassen am Fahrzeugsitz. Sack und/oder Insasse können mit einem Hüft- und/oder Beckengurt am Fahrzeugsitz oder einer anderen Komponente des Fahrzeugsitzes fixiert sein.

DE 10 2014 010 003 Al beschreibt eine Liege zum Einsatz in einem Fahrzeug, mit einer Decke mit mehreren orthogonal zur Fahrtrichtung verlaufenden Gurtbändern, die bei einem erfassten Unfall mit einer Spannvorrichtung gespannt werden.

Aufgabe der vorliegenden Erfindung ist, eine Liege für ein Fahrzeug oder einen verstellbaren Fahrzeugsitz mit Liegeposition so auszugestalten, dass sie einen sicheren Transport einer sich in Liegeposition befindlichen Person erlauben.

Diese Aufgabe wird gelöst durch die Vorrichtung mit den Merkmalen des Patentanspruchs 1.

Die Vorrichtung liegt in Form einer Liege für ein Fahrzeug vor, oder in Form eines verstellbaren Fahrzeugsitzes, der in einer Liegeposition eine Liege bildet. Die Vorrichtung ist zum Einbau in ein Fahrzeug vorgesehen,
- wobei die Liege durch eine Grundstruktur getragen ist,
- die Liege eine im Wesentlichen ebene Liegefläche bildet, und
- die Liege einen Kopfteil und eine Beinauflage aufweist, die in einer Längsrichtung der Liege voneinander beabstandet an entgegengesetzten Enden der Liege angeordnet sind.

Dabei weist die Liege eine Rückhaltevorrichtung auf, die wiederum einen Rückhaltesack und einen Hüftgurt aufweist, wobei der Rückhaltesack dazu ausgelegt ist, Füsse und Beine eines Passagiers aufzunehmen.

Die Fahrzeugsitzanordnung hat die Wirkung, dass im Fall einer Frontalkollision der Rückhaltesack einerseits einen Teil der auf den Passagier wirkenden Verzögerungskraft aufnimmt und andererseits verhindert, dass seine Beine ganz zusammengefaltet werden. Dadurch wird ein Submarining am Hüftgurt verhindert. Der Hüftgurt nimmt einerseits einen weiteren Teil der Verzögerungskraft bei einer Frontalkollision auf, und andererseits sichert er bei einem Überrollunfall den Passagier vor dem Herausfallen aus dem Sitz. Dies gilt insbesondere im Extremfall, wenn das Fahrzeug kopfüber stehen bleibt: dann wird der Passagier vor dem Herunterfallen und dem Zusammenklappen des Körpers um den Hüftgurt geschützt.

Diese Kombination von Rückhaltesack und Hüftgurt erlaubt die zuverlässige Realisierung der Sicherheitsfunktionen bei sowohl Frontalkollision als auch Überrollen, aber mit vergleichsweise geringen Einschränkungen bezüglich Benutzbarkeit und Komfort.

Die Begriffe «vorne», «vorwärts», «hinten» und «rückwärts» sind in der vorliegenden Schrift bezüglich einer Fahrtrichtung eines Fahrzeugs zu verstehen, in das die Fahrzeugsitzanordnung eingebaut ist oder einzubauen ist. In der Sitzposition sieht also ein Passagier nach vorne, in der Liegeposition sind seine Füsse vor seinem Kopf. Bei einer Frontalkollision wirkt die auf den Passagier wirkende Verzögerungskraft entgegen der Vorwärtsrichtung des Fahrzeugs, also nach rückwärts. Eine Gegenkraft, die der Passagier auf die Rückhaltevorrichtung und auf die Fahrzeugsitzanordnung ausübt, wirkt in Vorwärtsrichtung. Beide Kräfte wirken entlang der Fahrtrichtung. Bei der Fahrt in eine Ebene verläuft die Fahrtrichtung in horizontaler Richtung, also normal zur Schwerkraftrichtung. Die Orientierung «horizontal» im Zusammenhang mit einer Fahrzeugsitzanordnung ist parallel zur Fahrtrichtung, wenn die Fahrzeugsitzanordnung in einem Fahrzeug eingebaut ist.

Es werden auch die Begriffe «oben» und «unten» sowie «oberhalb» und «unterhalb» bezüglich der Liege verwendet. Diese beziehen sich auf die Orientierung des Passagiers in der Sitzposition und davon abgeleitet in der Liegeposition: das «obere» Ende des Sitzes oder der Liege ist gleich dem Kopfende, das «untere» Ende ist gleich dem Fussende.

In der Liegeposition ist somit das «untere Ende» der Liege gleichbedeutend mit dem «vorderen Ende», und das «obere Ende» gleichbedeutend mit dem «hinteren Ende».

Wenn im Zusammenhang mit einem Überrollen des Fahrzeuges von der Richtung einer Kraft nach «oben» und «untern» die Rede ist, bezieht sich dies auf die Richtung, in welche die Schwerkraft wirkt.

In Ausführungsformen ist es der Fall, dass der **Rückhaltesack** an der Liege und/oder an der Grundstruktur befestigt ist, und eine Befestigung des Rückhaltesacks bei einer Frontalkollision auftretende Kräfte in vorwiegend horizontaler Richtung an die Liege und/oder die Grundstruktur überträgt,
*insbesondere* wobei der Rückhaltesack dazu ausschliesslich an der Grundstruktur befestigt ist,
*insbesondere* an Seitenteilen der Grundstruktur.

Bei einer Frontalkollision bewirkt der Rückhaltesack einen Teil der Verzögerung des Passagiers. Diese Verzögerung benötigt eine Verzögerungskraft entgegen der Fahrtrichtung, also in horizontaler Richtung. Indem diese benötigte Verzögerungskraft in vorwiegend horizontaler Richtung auf die Liege und/oder die Grundstruktur übertragen wird, ist eine effiziente Übertragung der Verzögerungskraft möglich. Dies ist im Gegensatz zu einer Befestigung in zunächst vertikaler Richtung, wie beim Hüftgurt. Eine solche Befestigung kann eine horizontale Kraftkomponente nur aufnehmen, indem sich ein oberer Bereich mit dem Passagier nach vorne verschiebt und die Befestigung dann schräg verläuft. In einem solchen Fall werden die bei einer Frontalkollision auftretenden Kräfte, die horizontal verlaufen, in vorwiegend vertikaler Richtung abgeleitet, d.h. im Fall eines schrägen Gurtes als horizontale Komponente einer in Richtung des Gurtes verlaufenden Gesamtkraft.

In Ausführungsformen sind die Seitenteile, an denen der Rückhaltesack befestigt ist, als Armlehnen ausgebildet.

In Ausführungsformen ist es der Fall, dass die Befestigung des Rückhaltesacks bei einer Frontalkollision auftretende Kräfte in einem Winkel von weniger als 45° zur Horizontalen an die Liege und/oder die Grundstruktur überträgt,
*insbesondere* in einem Winkel von weniger als 30° zur Horizontalen.

In Ausführungsformen ist es der Fall, dass die Befestigung des Rückhaltesacks als Verbindungselement ausgebildet ist, *insbesondere* als Verbindungsgurt.

In Ausführungsformen kann es somit der Fall sein, dass der Verbindungsgurt beim normalen Gebrauch und insbesondere auch im Fall einer Frontalkollision im Wesentlichen horizontal verläuft, oder in einem Winkel von weniger als 45° oder von weniger als 30° zur Horizontalen. Ein Verbindungsgurt kann eine verstellbare Länge aufweisen und damit an die Grösse des Passagiers anpassbar sein. Eine solche Anpassung kann sicherstellen, dass der Körpermittelpunkt oder Schwerpunkt des Passagiers in Bereich des Hüftgurts zu liegen kommt.

In Ausführungsformen ist es der Fall, dass der Rückhaltesack in einem Hüftbereich mit Gurtschlössern befestigt ist, insbesondere mittels maximal zwei Gurtschlössern.

Damit ist es möglich, den Rückhaltesack in einfacher Weise schnell - mit insbesondere nur zwei Gurtschlössern - in eine Betriebskonfiguration zu bringen. Indem der Rückhaltesack im oder unterhalb des Hüftbereichs lösbar befestigt ist, kann er bequem montiert werden.

In Ausführungsformen ist der Rückhaltesack somit an einem hinteren Ende über Verbindungsgurte und Gurtschlösser an der Grundstruktur befestigbar.

In Ausführungsformen sind die Aufhängung an der Grundstruktur und/oder die Verbindungsgurte elastisch. Die Verbindungsgurte können in ihrer Länge justierbar sein.

In Ausführungsformen ist es der Fall, dass der Rückhaltesack ausschliesslich unterhalb eines Hüftbereichs der Liege angeordnet ist, wobei mindestens eines vom Folgenden der Fall ist:
- der Rückhaltesack ist dazu ausgelegt, die Oberschenkel des Passagiers nur zum Teil abzudecken;
- ein oberer Rand des Rückhaltesacks verläuft unterhalb des Hüftgurts.

Der Hüftbereich entspricht im Wesentlichen der Position der Hüfte des Passagiers auf der Liege, und damit auch der Position seines Körperschwerpunkts in Längsrichtung.

Der Hüftbereich der Liege kann in Bezug auf den H-Punkt definiert sein. Der H-Punkt ist der Drehpunkt zwischen dem Rumpf und den Oberschenkeln und bestimmt die theoretische Position der Hüfte des Fahrzeuginsassen. Bei einer Liege, die ausgehend von einer Sitzposition durch Umkonfigurieren gebildet wird, weist der H-Punkt in der Sitzposition, in Längsrichtung betrachtet, eine definierte Lage bezüglich des Sitzelements auf. Diese Lage bezüglich des Sitzelements kann für die Definition des Hüftbereichs in der Liegeposition verwendet werden. Damit kann der Hüftbereich definiert werden als ein Bereich zwischen zwanzig cm oberhalb und zwanzig cm unterhalb dieser Lage.

Bei einer Liege, die ausschliesslich in einer Liegestellung vorliegt, kann der Hüftbereich ausgehend von der Mitte der Liege - in Längsrichtung betrachtet - definiert sein. Damit kann der Hüftbereich definiert werden als ein Bereich zwischen zwanzig cm oberhalb und zwanzig cm unterhalb der Mitte der Liege. Dabei ist, falls eine Fussauflage vorgesehen ist, die Länge der Liege inklusive die Fussauflage zu verstehen.

In Ausführungsformen ist der Rückhaltesack bezüglich der Längsrichtung der Liege symmetrisch an der Grundstruktur respektive der Liege befestigt. Beispielsweise sind zwei Befestigungspunkte des Rückhaltesacks, wie Gurtschlösser, symmetrisch links und rechts der längs verlaufenden Mittelachse der Liege angeordnet. Oder ein einziger Befestigungspunkt oder ein Gurtschloss ist auf dieser Mittelachse angeordnet.

In Ausführungsformen ist es der Fall, dass bezüglich einer Länge des Rückhaltesacks zwischen einem unteren Ende des Rückhaltesacks und einem oberen Rand des Rückhaltesacks mindestens eines vom Folgenden der Fall ist:
- die Länge beträgt zwischen zwanzig cm und achtzig cm, insbesondere zwischen dreissig cm und fünfundsechzig cm, insbesondere zwischen vierzig cm und fünfzig cm;
- der obere Rand verläuft zwischen dreissig cm oberhalb und dreissig cm unterhalb einer Mitte zwischen Fussende der Liegefläche und dem Hüftgurt, insbesondere zwischen zwanzig cm oberhalb und zwanzig cm unterhalb dieser Mitte, insbesondere zwischen zehn cm oberhalb und zehn cm unterhalb dieser Mitte.

Dabei ist, falls eine Fussauflage vorgesehen ist, das Fussende der Liegefläche inklusive die Fussauflage zu verstehen.

In Ausführungsformen ist bezüglich einer Länge des Rückhaltesacks zwischen einem unteren Ende des Rückhaltesacks und einem unteren Rand des Rückhaltesacks folgendes der Fall: der untere Rand verläuft zwischen dreissig cm oberhalb und dreissig cm unterhalb einer Mitte zwischen dem Fussende der Liegefläche und dem oberen Rand, insbesondere zwischen zwanzig cm oberhalb und zwanzig cm unterhalb dieser Mitte.

Indem die Oberkante des Rückhaltesacks relativ weit unten verläuft, ist ein bequemer Einstieg respektive Ausstieg möglich, ohne dass die Gurtschlösser geöffnet werden müssen. Auch wirkt der Rückhaltesack für den Passagier weniger einengend. Um das Submarining zu verhindern, ist es ausreichend, wenn der Rückhaltesack mindestens bis über die Knie des Passagiers reicht.

In Ausführungsformen ist der Rückhaltesack so dimensioniert, dass die Knie sich nicht zusammenklappen können. Dazu kann es der Fall sein, dass der Rückhaltesack an einer Einstiegsöffnung einen Umfang zwischen 80 cm und 120 cm aufweist, insbesondere zwischen 90 cm und 110 cm, insbesondere von mindestens annähernd 100 cm. Als Einstiegsöffnung kann der Bereich verstanden werden, in dem der Rückhaltesack, von oben her gesehen, erstmals den Passagier vollständig umschliesst. Von dort ausgehend kann sich der Rückhaltesack zum Fussbereich hin verjüngen, insbesondere auf eine Breite von zwischen 35 cm und 45 cm.

In Ausführungsformen weist die Vorrichtung eine Überrollsicherung auf, mit der ein vorderes Ende des Rückhaltesacks an einem vorderen Ende der Liege und/oder an der Grundstruktur befestigt ist oder befestigbar ist,
*insbesondere* wobei die Überrollsicherung eine Verbindung zwischen dem Rückhaltesack und der Liege mit einem Gurtschloss aufweist.

Die Überrollsicherung hält bei einem Überrollunfall, wenn das Fahrzeug Kopf steht, den unteren Teil des Rückhaltesacks an der Liege respektive der Grundstruktur und verhindert damit ein Herunterklappen der Beine des Passagiers. Der Körperschwerpunkt des Passagiers wird in dieser Lage durch den Hüftgurt gehalten.

Das vordere Ende des Rückhaltesacks kann auch als Fussbereich des Rückhaltesacks bezeichnet werden. Der Rückhaltesack kann bei Nichtgebrauch in oder unterhalb der Beinauflage verstaut sein.

In Ausführungsformen ist der Rückhaltesack mindestens in einem Beinbereich zur Liege hin offen. Es ist ausreichend, wenn er in einem Fussbereich geschlossen ist. Dadurch werden im Kollisionsfall die Beine in den Fussbereich eintauchen und durch diesen zusammengehalten und dadurch wiederum eine weitere Bewegung des Passagiers in Vorwärtsrichtung und das Submarining verhindert.

In Ausführungsformen weist der Rückhaltesack mindestens einen Gurt auf, der von einem ersten Befestigungspunkt zu einem zweiten Befestigungspunkt des Rückhaltesacks verläuft und dabei unter einem Fussbereich des Rückhaltesacks hindurch verläuft,
*insbesondere* wobei der Rückhaltesack mehrere Gurte aufweist, die unter dem Fussbereich hindurch verlaufen und auf den Fussbereich nach vorne wirkende Kräfte aufnehmen und auf die Befestigungspunkte ableiten.

Der mindestens eine Gurt nimmt Verzögerungskräfte auf und überträgt sie an die Befestigungspunkte. Dadurch wird eine übermässige Belastung einer Hülle des Rückhaltesacks vermieden, und die Hülle kann entsprechend leichter ausgebildet werden. Die beiden Befestigungspunkte können Ansatzpunkte von Verbindungsgurten zu den Gurtschlössern sein, oder die Gurtschlösser selber. Der mindestens eine Gurt kann in Form eines «U» um den Rückhaltesack verlaufen. Alternativ oder zusätzlich kann der mindestens eine Gurt kreuzförmig von den Befestigungspunkten zum Fussbereich verlaufen.

In Ausführungsformen weist der Rückhaltesack am unteren Ende des Fussbereichs Versteifungselemente auf, die ein Zusammensacken des Fussbereichs verhindern und dadurch den Fussbereich offenhalten.

In Ausführungsformen weist die Vorrichtung genau einen **Hüftgurt** auf, der im Hüftbereich angeordnet ist.

Der Hüftgurt nimmt bei einer Frontalkollision einen weiteren Teil der Verzögerungskräfte auf, in Ergänzung zum Rückhaltesack. Dabei ist ein einziger Hüftgurt ausreichend, es sind keine weiteren Quergurte erforderlich. Weder Hüftgurt noch Rückhaltesack müssen die gesamten Kräfte aufnehmen. Damit geschieht eine Aufteilung der Kräfte, die ein verletzungsfreies Zurückhalten des Passagiers gewährleisten, bei gleichzeitig hohem Komfort und einfacher Konstruktion. Auch im Überrollfall ist ein einzelner Hüftgurt ausreichend, in Kombination mit dem Rückhaltesack den Passagier vor dem Zusammenklappen oder Herunterfallen zu bewahren.

In Ausführungsformen ist es der Fall, dass der Hüftgurt ausschliesslich an seinen beiden Enden an der Grundstruktur und/oder der Liege befestigt oder befestigbar ist, *insbesondere* indem er an einem Ende mit einem Gurtstraffer an der Grundstruktur befestigt ist und an einem anderen Ende mit einem Gurtschloss an der Grundstruktur lösbar befestigt ist.

In Ausführungsformen ist der Hüftgurt an einem flexiblen Flächenelement wie beispielsweise einer Decke befestigt, insbesondere indem er einen oberen Abschluss der Decke bildet und das flexible Flächenelement sich mindestens über einen Teil des Rückhaltesacks erstreckt.

In Ausführungsformen ist es der Fall, dass die Grundstruktur an einem hinteren Bereich eine **Fussauflage** für eine hinter der Fahrzeugsitzanordnung angeordnete weitere Fahrzeugsitzanordnung aufweist,
*insbesondere* wobei beim Verstellen oder Umkonfigurieren eines Fahrzeugsitzes in eine Liegeposition die Fussauflage von einer Sitzstellung in eine Liegestellung gebracht wird, in welcher die Fussauflage eine Verlängerung der Liege der weiteren Fahrzeugsitzanordnung bildet;
*und insbesondere* dabei die Fussauflage motorisch angetrieben ist und beim Verstellen in die Liegeposition automatisch in die Liegestellung gebracht wird.

In der Liegestellung verläuft die Fussauflage im Wesentlichen horizontal. In der Sitzstellung kann sie vertikal nach unten oder nach oben weggeklappt sein. In Ausführungsformen ist sie durch einen Schiebemechanismus nach vorne verschoben oder durch einen Hebelmechanismus nach vorne weggeschwenkt.

In Ausführungsformen ist es der Fall, dass die Grundstruktur an einem hinteren Bereich eine **Knautschzone** für eine hinter der Fahrzeugsitzanordnung angeordnete weitere Fahrzeugsitzanordnung aufweist, insbesondere wobei mindestens eines von dem Folgen der Fall ist:
- die Knautschzone ist derart ausgebildet, dass sie sich bei einer Vorwärtslast von zehn kN um mindestens hunderte Millimeter und höchstens dreihundert Millimeter verformt;
- die Knautschzone weist eine Sollbruchstelle auf, die bei einer Vorwärtskraft von 10 kN bricht.

Die Knautschzone kann so ausgebildet sein, dass nach dem Durchbrechen der Sollbruchstelle durch einen sich in Vorwärtsrichtung bewegenden Körpers eine Begrenzung der Bewegung durch ein Begrenzungselement stattfindet. Das Begrenzungselement kann durch eine Wand oder durch Bänder realisiert sein.

Weitere bevorzugte Ausführungsformen gehen aus den abhängigen Patentansprüchen hervor.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1-3: eine Fahrzeugsitzanordnung in einer Sitzposition, Ruheposition und Liegeposition;
- Figur 4-6: zwei Fahrzeugsitzanordnungen, wobei die hintere in einer Sitz- Ruhe- und Liegeposition ist;
- Figur 7-8: einen Rückhaltesack;
- Figur 9: ein Fahrzeug mit Fahrzeugsitzanordnungen.

Grundsätzlich sind in den Figuren gleiche oder gleich wirkende Teile mit gleichen Bezugszeichen versehen.

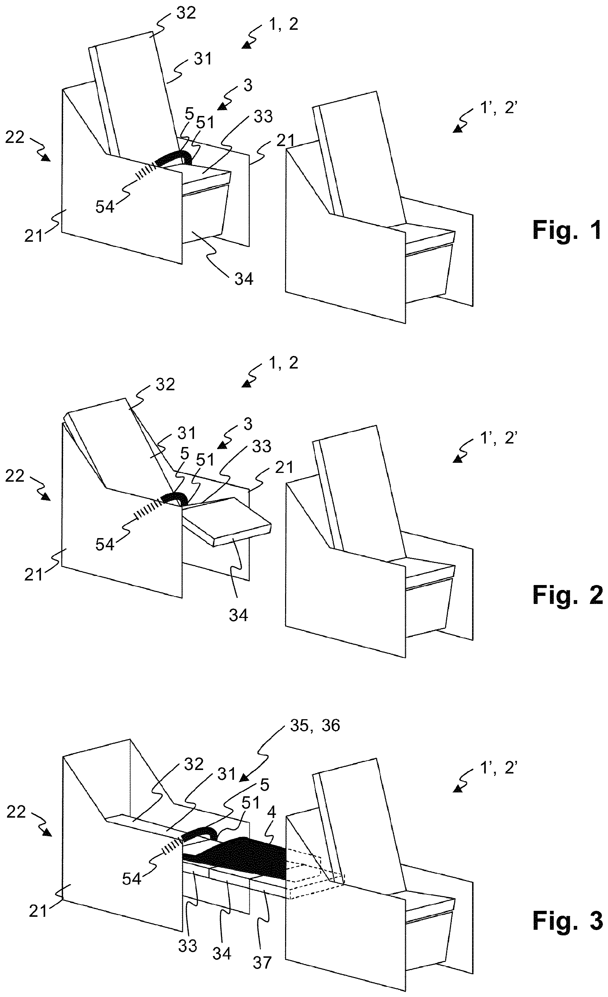

**Figur 1-3** zeigen eine Fahrzeugsitzanordnung 1 jeweils in einer Sitzposition, Ruheposition (Relax-Position) und Liegeposition. Eine Fahrzeugsitzanordnung 1 kann ein Fahrzeugsitz 2 sein, der durch Verstellen oder Umkonfigurieren in zwei oder mehr dieser Positionen gebracht werden kann. In der Liegeposition bildet die Fahrzeugsitzanordnung 1 eine Liege 36. Alternativ kann eine Fahrzeugsitzanordnung 1 durch eine Liege 36 realisiert sein, die nicht in eine andere Position gebracht werden kann. D.h., die Liege 36 kann nicht umkonfiguriert werden. Die folgenden Ausführungen bezüglich einer Liege 36, insbesondere bezüglich der Benutzung und der Kombination mit einem Rückhaltesack 4, betreffen sowohl eine reine, nicht umkonfigurierbare Liege 36, als auch eine Liege 36, die durch Umkonfigurieren eines verstellbaren Fahrzeugsitzes 2 gebildet werden kann.

Die in den **Figuren 1-3** gezeigte Fahrzeugsitzanordnung 1 ist ein verstellbarer Fahrzeugsitz 2. Der Fahrzeugsitz 2 weist eine Grundstruktur 22 auf, die eine Sitzstruktur 3 trägt. Die Grundstruktur 22 kann zwei Seitenteile 21 aufweisen. Die Sitzstruktur 3 weist eine Rückenlehne 31 mit einem Kopfteil 32 sowie ein Sitzelement 33 und eine Beinauflage 34 auf. Im gestreckten Zustand bildet die Sitzstruktur 3 eine Liege 36 mit einer Liegefläche 35 auf. Die Liegefläche 35 ist dabei eine obere Fläche der Liege 36, auf welcher bei Benutzung der Liege 36 eine Person liegt. Dies gilt auch für die Liegefläche 35 einer nicht umkonfigurierbaren Liege 36. In der Liegeposition (**Figur 3**) kann eine Fussauflage 37 zur Verlängerung der Liegefläche 35 hochgeklappt werden. Die Fussauflage 37 kann Teil einer weiteren Fahrzeugsitzanordnung 1' sein, oder in anderer Weise an der Grundstruktur 22 befestigt sein. Ein Hüftgurt 5 hat in der Sitzposition und Ruheposition die Funktion eines normalen Sicherheitsgurts. In der Liegeposition sichert der Hüftgurt 5 den Passagier in Kombination mit einem Rückhaltesack 4. Der Hüftgurt 5 ist an einem Ende mit einem Gurtstraffer 51 befestigt. am anderen Ende mittels eines Gurtschlosses 54. Der Hüftgurt 5 ist damit üblicherweise an der Grundstruktur 22 befestigt. In Ausführungsformen ist er damit an der Liege 36 befestigt. In nicht dargestellten Ausführungsformen bildet der Hüftgurt 5 ein oberes Ende einer Decke, die über dem Rückhaltesack liegt oder mit dem Rückhaltesack verbunden ist.

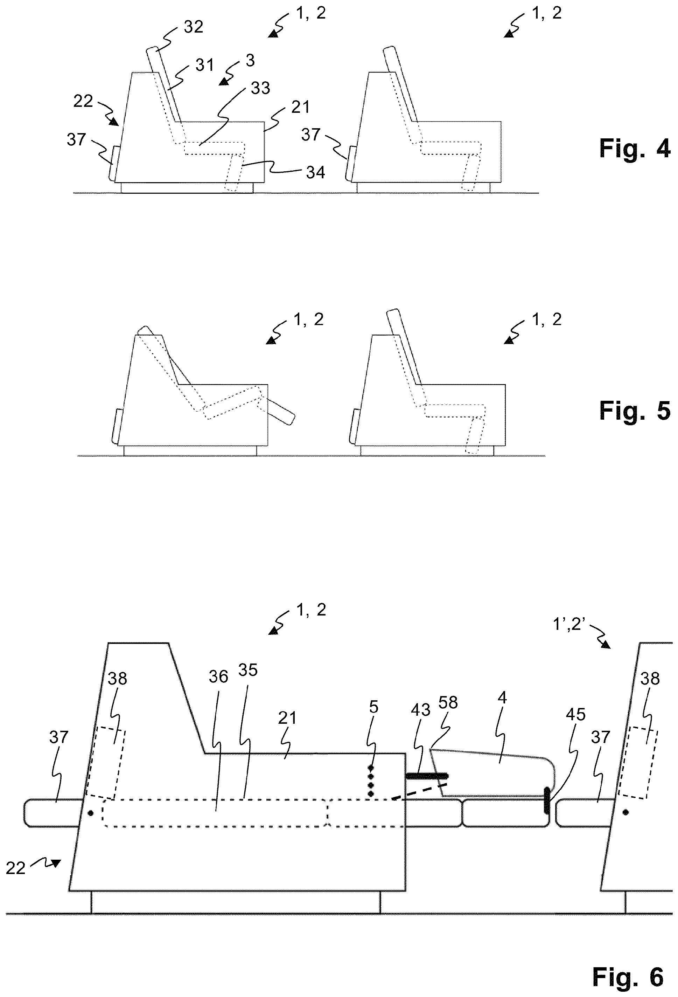

**Figur 4-6** zeigen jeweils zwei Fahrzeugsitzanordnungen, wobei die hintere jeweils in einer Sitz-, Ruhe- beziehungsweise Liegeposition ist. Zusätzlich zu den bereits genannten Elementen sind in der **Figur 6** eine Befestigung des Rückhaltesacks 4 und eine Knautschzone 38 schematisch gezeigt.

Die Knautschzone 38 ist rückwärts einer Fahrzeugsitzanordnung 1 angeordnet. Sie kann als zusätzliche Sicherung zum Abbremsen des Passagiers in der dahinter liegenden Fahrzeugsitzanordnung 1 dienen.

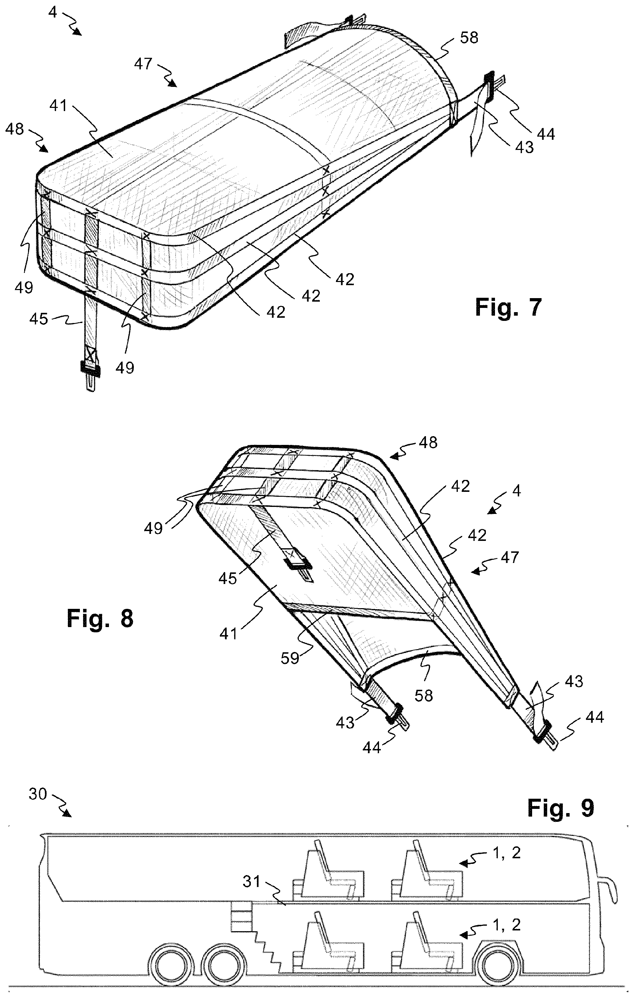

**Figur 7** und **8** zeigen unterschiedliche Ansichten eines Rückhaltesacks 4. Der Rückhaltesack 4 weist eine Hülle 41 auf, die durch einen oder mehrere Gurte 42 verstärkt ist. Die Hülle 41 ist aus einem flächigen flexiblen Material gefertigt, in der Regel einem textilen Material. Die Hülle 41 umschliesst einen Passagier in einem Fussbereich 48 und mindestens teilweise in einem Beinbereich 47. Die Gurte 42 sind über Verbindungsgurte 43 an Gurtschlössern 44 befestigt. Die Gurte 42 laufen um den Fussbereich 48 herum vom einen Verbindungsgurt 43 zum anderen. Damit leiten die Gurte 42 in Vorwärtsrichtung wirkende Kräfte über die Verbindungsgurte 43 und Gurtschlösser 44 auf die Grundstruktur 22 ab. Korrespondierende Elemente der Gurtschlösser 44 sind dazu an der Grundstruktur 22 selber befestigt, beispielsweise im Bereich einer Vorderkante einer Armlehne, wie in Figur 6 mit einer ausgezogenen Linie schematisch gezeigt. Die Gurtschlösser 44 können auch an der Liege 36 befestigt sein, entsprechend der strichlierten Linie. In beiden Fällen wirken die Kräfte zwischen Rückhaltesack 4 und Grundstruktur 22 respektive Liege 36 im Wesentlichen in horizontaler Richtung.

Auch wenn die Verbindungsgurte 43 nicht exakt horizontal verlaufen, so hat eine Kraft in Längsrichtung der Verbindungsgurte 43 doch überwiegend eine Komponente in horizontaler Richtung, das heisst in Fahrtrichtung. Das bedeutet, dass der Winkel zwischen der Längsrichtung der Verbindungsgurte 43 und der Horizontalen kleiner ist als 45°, vorzugsweise kleiner als 30°.

Dies ist im Gegensatz zu Gurten, die nominell im Winkel von 90° zur Horizontalen verlaufen. Solche Gurte können Kräfte in horizontaler Richtung erst aufnehmen, wenn der Passagier soweit nach vorne gerutscht ist, dass die Gurte schräg stehen. Oder die Gurte sind - in vertikaler Richtung - derart stark angezogen, dass der Passagier in horizontaler Richtung durch Reibung zwischen Passagier und Liege 36 abgebremst wird. In beiden Fällen ist die Sicherheit und/oder der Komfort beeinträchtigt.

In einem Fussbereich 48 am unteren Ende des Rückhaltesacks 4 können Versteifungselemente 49 angeordnet sein. Diese halten den Fussbereich 48 in vertikaler Richtung offen. Dies dient einerseits zur Erhöhung des Komforts. Andererseits wird damit der Fussbereich 48 in einer definierten Konfiguration stabilisiert, was die Wirkung in einer Unfallsituation zuverlässiger macht. Im Fussbereich 48 ist der Rückhaltesack 4 mit einer Überrollsicherung 45 an der Liege 36 befestigbar. Die Überrollsicherung 45 kann durch einen Gurt gebildet sein, der mit einer Gurtschloss an der Liege 36 befestigbar ist. In anderen Ausführungsformen ist der Rückhaltesack 4 dauernd an der Liege 36 befestigt. Bei Nichtgebrauch kann der Rückhaltesack 4 im Bereich der Beinauflage 34 verstaut werden. Dabei kann der je Rückhaltesack 4 nach Ausführungsform mit der Liege 36 verbunden bleiben oder von der Liege 36 getrennt werden.

Ein oberer Rand 58 des Rückhaltesacks 4 ist ein rückwärtiger und quer zur Längsrichtung der Liege 36 verlaufender Rand der Hülle 41 an der Oberseite der Hülle 41. Ein unterer Rand 59 ist ein quer verlaufender rückwärtiger Rand der Hülle 41 an der Unterseite der Hülle 41. Je weiter vorne die beiden Ränder angeordnet sind, desto bequemer wird das Einsteigen in den Rückhaltesack 4 für den Benutzer. Umgekehrt müssen der obere und der untere Rand einen bestimmten minimalen Abstand vom Fussbereich 48 aufweisen, respektive einen maximalen Abstand vom Hüftgurt 5, um die Sicherheit des Passagiers zu gewährleisten.

In der gezeigten Ausführungsform verläuft der obere Rand 58 unterhalb des Hüftgurts 5 und damit auch eines Hüftbereichs des Passagiers. Es ist nicht erforderlich, dass die Beine des Passagiers vollständig vom Rückhaltesack 4 umschlossen sind, sondern es reicht aus, wenn die Knie umschlossen sind. Der obere Rand 58 kann daher im Bereich der Oberschenkel des Passagiers liegen. Damit ist gesichert, dass bei einem Frontalunfall die Beine zusammengehalten werden und so in den Rückhaltesack 4 eintauchen. Damit wird der Passagier kontrolliert und zuverlässig abgebremst. Bei einem Überrollunfall ist gesichert, dass die Beine nicht aus dem Rückhaltesack 4 herausfallen.

In der gezeigten Ausführungsform verläuft der untere Rand 59 unterhalb des oberen Rands 58. Auch hier reicht es, aus den oben genannten Gründen, wenn die Knie des Passagiers umschlossen sind. Im Bereich des unteren Randes bildet der Rückhaltesack 4 eine Einstiegsöffnung. In einer nicht dargestellten Ausführungsform verjüngt sich der Sack von der Einstiegsöffnung zum Fussbereich 48 hin, beispielsweise von einer Breite von mindestens annähernd 50 cm (entsprechend einem Umfang von 100 cm) auf eine Breite von mindestens annähernd 40 cm.

Die Wirkung der Rückhaltevorrichtung aus Hüftgurt 5 und Rückhaltesack 4 ist wie folgt:
Im Fall einer Frontalkollision wird das Fahrzeug und damit auch der Sitz respektive die Liege abrupt verzögert. Der Passagier respektive die beförderte Person wird sowohl durch den Rückhaltesack 4 als auch den Hüftgurt 5 zurückgehalten und, ausgehend von der Kollisionsgeschwindigkeit, abgebremst.

Die beförderte Person rutscht somit einerseits in den Rückhaltesack 4, bis sie mit den Füssen unten ansteht. Dabei hält der Rückhaltesack 4 die Beine zusammen währenddem sich die Knie anwinkeln. Die Beugung respektive das Anwinkeln der Knie wird durch den Rückhaltesack 4 eingeschränkt, und dadurch wiederum die Bewegung der Person in den Rückhaltesack 4 hinein abgebremst. Der Rückhaltesack sollte also so dimensioniert sein, dass die sich die Knie nicht vollständig anwinkeln können. Dadurch wird verhindert, dass der Körper zu weit in den Rückhaltesack eintaucht und ein Submarining am Hüftgurt 5 oder am Rückhaltesack 4 geschehen kann. So werden schwere Verletzungen bei den Weichteilen und oder im Halsbereich vermieden.

Das Rückhaltesystem funktioniert unabhängig von der Liegeposition der beförderten Person, so dass sie sich frei auf dem Liegesitz drehen und in den meisten Schlafpositionen ruhen kann.

Bei einem Unfall mit einem Überschlag wird von einer seitlichen, leicht nach oben gerichteter Beschleunigung des Körpers ausgegangen. Der Körper fällt dabei - im Extremfall - ohne Initialgeschwindigkeit seitlich aus dem Sitz und wird lediglich durch die Erdbeschleunigung (1 g) beschleunigt. Dabei hält der Rückhaltesack die Beine und verhindert ein Anwinkeln oder Zusammenklappen des ganzes Körpers um den Hüftgurt, wobei der Hüftgurt 5 den Körper vor den Herunterfallen respektive Herausfallen aus dem Fahrzeugsitz respektive der Fahrzeugsitzanordnung 1 schützt.

Indem nur ein Hüftgurt 5 vorliegt und indem der Rückhaltesack 4 vergleichsweise kurz ausgebildet ist, erlaubt die Vorrichtung der Person genügend Bewegungsfreiheit für verschiedene Liegepositionen und einen entspannten Schlaf. Weiter ist die Vorrichtung einfach montier- und demontierbar, insbesondere nach einer Frontalkollision.

**Figur 9** zeigt ein Fahrzeug 30 mit mehreren Fahrzeugsitzanordnungen 1. Die Fahrzeugsitzanordnungen 1 sind jeweils an einer Fahrzeugstruktur 31 des Fahrzeugs 30 befestigt. Die Fahrzeugstruktur 31 ist beispielsweise durch das Fahrzeugchassis gebildet, gegebenenfalls erweitert um weitere tragende Elemente.

## Patentansprüche

1. Vorrichtung in Form einer Liege (36) für ein Fahrzeug, oder in Form eines verstellbaren Fahrzeugsitzes, der in einer Liegeposition eine Liege (36) bildet, wobei die Vorrichtung zum Einbau in ein Fahrzeug (30) vorgesehen ist,
• wobei die Liege (36) durch eine Grundstruktur (22) getragen ist,
• die Liege (36) eine im Wesentlichen ebene Liegefläche (35) bildet,
• die Liege (36) einen Kopfteil (32) und eine Beinauflage (34) aufweist, die in einer Längsrichtung der Liege (36) voneinander beabstandet an entgegengesetzten Enden der Liege (36) angeordnet sind,
**dadurch gekennzeichnet, dass** die Liege (36) eine Rückhaltevorrichtung aufweist, die wiederum einen Rückhaltesack (4) und einen Hüftgurt (5) aufweist, wobei der Rückhaltesack (4) dazu ausgelegt ist, Füsse und Beine eines Passagiers aufzunehmen.

2. Vorrichtung gemäss Anspruch 1, wobei der **Rückhaltesack** (4) an der Liege (36) und/oder an der Grundstruktur (22) befestigt ist, und eine Befestigung des Rückhaltesacks (4) bei einer Frontalkollision auftretende Kräfte in vorwiegend horizontaler Richtung an die Liege (36) und/oder die Grundstruktur (22) überträgt, *insbesondere* wobei der Rückhaltesack (4) dazu ausschliesslich an der Grundstruktur (22) befestigt ist,
*insbesondere* an Seitenteilen (21) der Grundstruktur (22).

3. Vorrichtung gemäss Anspruch 2, wobei die Befestigung des Rückhaltesacks (4) bei einer Frontalkollision auftretende Kräfte in einem Winkel von weniger als 45° zur Horizontalen an die Liege (36) und/oder die Grundstruktur (22) überträgt, *insbesondere* in einem Winkel von weniger als 30° zur Horizontalen.

4. Vorrichtung gemäss Anspruch 2 oder 3, wobei die Befestigung des Rückhaltesacks (4) als Verbindungselement ausgebildet ist, *insbesondere* als Verbindungsgurt (43),

5. Vorrichtung gemäss einem der vorangehenden Ansprüche, wobei der Rückhaltesack (4) in einem Hüftbereich mit Gurtschlössern (44) befestigt ist, insbesondere mittels maximal zwei Gurtschlössern (44).

6. Vorrichtung gemäss einem der vorangehenden Ansprüche, wobei der Rückhaltesack (4) ausschliesslich unterhalb eines Hüftbereichs der Liege (36) angeordnet ist, wobei mindestens eines vom Folgenden der Fall ist:
• der Rückhaltesack (4) ist dazu ausgelegt, die Oberschenkel des Passagiers nur zum Teil abzudecken;
• ein oberer Rand (58) des Rückhaltesacks (4) verläuft unterhalb des Hüftgurts (5).

7. Vorrichtung gemäss einem der vorangehenden Ansprüche, wobei bezüglich einer Länge des Rückhaltesacks (4) zwischen einem unteren Ende des Rückhaltesacks (4) und einem oberen Rand (58) des Rückhaltesacks (4) mindestens eines vom Folgenden der Fall ist:
• die Länge beträgt zwischen zwanzig cm und achtzig cm, insbesondere zwischen dreissig cm und fünfundsechzig cm, insbesondere zwischen vierzig cm und fünfzig cm;
• der obere Rand (58) verläuft zwischen dreissig cm oberhalb und dreissig cm unterhalb einer Mitte zwischen Fussende der Liegefläche (35) und dem Hüftgurt (5), insbesondere zwischen zwanzig cm oberhalb und zwanzig cm unterhalb dieser Mitte, insbesondere zwischen zehn cm oberhalb und zehn cm unterhalb dieser Mitte.

8. Vorrichtung gemäss einem der vorangehenden Ansprüche, wobei der Rückhaltesack (4) so dimensioniert ist, dass die Knie eines Insassen sich nicht zusammenklappen können, indem der Rückhaltesack (4) an einer Einstiegsöffnung einen Umfang zwischen 80 cm und 120 cm aufweist, insbesondere zwischen 90 cm und 110 cm, insbesondere von mindestens annähernd 100 cm.

9. Vorrichtung gemäss Anspruch 8, wobei Rückhaltesack (4) sich zu einem Fussbereich (48) hin verjüngt, insbesondere auf eine Breite von zwischen 35 cm und 45 cm.

10. Vorrichtung gemäss einem der vorangehenden Ansprüche, aufweisend eine Überrollsicherung (45), mit der ein vorderes Ende des Rückhaltesacks (4) an einem vorderen Ende der Liege (36) und/oder an der Grundstruktur (22) befestigt ist oder befestigbar ist,
*insbesondere* wobei die Überrollsicherung (45) eine Verbindung zwischen dem Rückhaltesack (4) und der Liege (36) mit einem Gurtschloss aufweist.

11. Vorrichtung gemäss einem der vorangehenden Ansprüche, wobei der Rückhaltesack (4) mindestens einen Gurt (42) aufweist, der von einem ersten Befestigungspunkt zu einem zweiten Befestigungspunkt des Rückhaltesacks verläuft und dabei unter einem Fussbereich (48) des Rückhaltesacks (4) hindurch verläuft,
*insbesondere* wobei der Rückhaltesack (4) mehrere Gurte (42) aufweist, die unter dem Fussbereich (48) hindurch verlaufen und auf den Fussbereich nach vorne wirkende Kräfte aufnehmen und auf die Befestigungspunkte ableiten.

12. Vorrichtung gemäss einem der vorangehenden Ansprüche, aufweisend genau einen **Hüftgurt** (5), der im Hüftbereich angeordnet ist.

13. Vorrichtung gemäss Anspruch 12, wobei der Hüftgurt (5) ausschliesslich an seinen beiden Enden an der Grundstruktur (22) und/oder der Liege (36) befestigt oder befestigbar ist,
*insbesondere* indem er an einem Ende mit einem Gurtstraffer (51) an der Grundstruktur (22) befestigt ist und an einem anderen Ende mit einem Gurtschloss (54) an der Grundstruktur (22) lösbar befestigt ist.

14. Vorrichtung gemäss einem der vorangehenden Ansprüche, wobei die Grundstruktur (22) an einem hinteren Bereich eine **Fussauflage** (37) für eine hinter der Fahrzeugsitzanordnung (1) angeordnete weitere Fahrzeugsitzanordnung (1') aufweist,
*insbesondere* wobei beim Verstellen oder Umkonfigurieren eines Fahrzeugsitzes (2) in eine Liegeposition die Fussauflage (37) von einer Sitzstellung in eine Liegestellung gebracht wird, in welcher die Fussauflage (37) eine Verlängerung der Liege (36) der weiteren Fahrzeugsitzanordnung (1') bildet;
*und insbesondere* dabei die Fussauflage (37) motorisch angetrieben ist und beim Verstellen in die Liegeposition automatisch in die Liegestellung gebracht wird.

15. Vorrichtung gemäss einem der vorangehenden Ansprüche, wobei die Grundstruktur (22) an einem hinteren Bereich eine **Knautschzone** (38) für eine hinter der Fahrzeugsitzanordnung (1) angeordnete weitere Fahrzeugsitzanordnung (1') aufweist, insbesondere wobei mindestens eines von dem Folgen der Fall ist:
• die Knautschzone (38) ist derart ausgebildet, dass sie sich bei einer Vorwärtslast von zehn kN um mindestens hunderte Millimeter und höchstens dreihundert Millimeter verformt;
• die Knautschzone (38) weist eine Sollbruchstelle auf, die bei einer Vorwärtskraft von 10 kN bricht.
